# EUROPEAN PATENT APPLICATION

(11) **EP 1 727 384 A1**
(43) Date of publication of application: **29.11.2006**
(21) Application number: 05425369.5
(22) Date of filing: 26.05.2005
(51) Int. Cl.: H04Q 7/38

(54) **Method and system for producing adjacent cell lists in cellular communication systems, computer program product therefor**

(71) Applicant: Siemens S.p.A., 20126 Milano (IT)
(72) Inventor: Caione, Salvatore, 67031 L'Aquila (IT); Palagiano, Leandro Luigi Maria, 20093 Cologno Monzese (IT)

(57) **Abstract**

A list (30) of neighbouring cells for using in a mobile terminal (20) of a cellular communication network (10, 12), is defined and maintained by both adding (S) and removing (R; R') neighbouring cells from the list. Preferably, the process is performed by:
- selecting at least one operational parameter of the cellular communication network representative of the quality of service (QoS) perceived by the user of mobile terminals,
- defining a threshold value for that operational parameter, which threshold is representative of a minimum acceptable level of the quality of service,
- checking whether the neighbouring cells included in the list ensure values for that at least one operational parameter better than the said threshold value, and
- removing from the list those neighbouring cells that fail to pass such check or are redundant.

## Description

### Field of the invention

The invention relates to cellular communication systems and was developed by paying specific attention to the possible application in cellular communication systems of the third generation (3G) type.

Reference to this preferred field of application of the invention is not however to be intended in a limiting sense of the scope of the invention.

### Description of the related art

In order to ensure proper operation, especially as regards "hand-over" procedures, present-day cellular communication systems provide for the mobile terminals in the system having stored therein a list of the neighbouring cells to the cell or cells that is/are currently serving the mobile terminal.

In order to define the appropriate list of adjacent cells, tools available today usually compare measurements performed in-the-field (for instance by means of a scanner) with test measurements performed by the mobile terminal themselves. Essentially, these lists are compiled by listing cells to be added to those already listed in the user terminals.

This approach is heavily conditioned by the behaviour of the user equipment and by the maximum number of cells that can be stored within a user terminal.

### Object and summary of the present invention

The approach just described, which essentially gives as a result a list of cells to be added to a list already available in the user terminal, is largely impractical. The need therefore exists of providing a more efficient solution to the problem of generating appropriate lists of adjacent cells that the mobile terminals will use in a cellular communication network.

The object of the present invention is to provide a response to such a need.

According to the present invention, that object is achieved by means of a method having the features set forth in the claims that follow. The invention also relates to a corresponding system as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the execution of the method of the invention. Reference to "at least one computer" is evidently intended to highlight the possibility for the present invention to be implemented in a distributed/modular fashion.

The claims are an integral part of the disclosure of the invention provided herein.

A preferred embodiment of the invention is based on a method producing lists of neighbouring cells to be stored in the network (e.g. one list associated to each cell) and to be communicated to mobile terminals in a cellular communication network; the method will optimise these lists of neighbouring cells by adding as well as by removing cells from these lists.

A particularly preferred embodiment of the invention includes the steps of:
- selecting at least one operational parameter of said cellular communication network, said at least one operational parameter being representative of the quality of the service perceived by the user of said mobile terminal,
- defining a threshold value for said at least one operational parameter said threshold representative of a minimum acceptable level of said quality of the service,
- checking for each cell pertaining to a defined area, in a number of relevant cell places, whether the neighbouring cells of the same or different area included in said list may ensure values, for said at least one operational parameter, equal or better than said respective threshold values (requirement),
- removing from the list those cells that fail to pass both these values, and
- adding to the list those cells not yet listed but that can satisfy the most restrictive requirement.

The arrangement described herein makes it possible to generate neighbouring cell lists based on, e.g., in-the-field measurements, system defined algorithms, effective values configuration parameters and their change simulation. The resulting arrays are subsequently processed (typically by means of symbolic mathematical formulas) in order to select for each cell considered the best set of neighbouring cells needed in order to satisfy network quality requirements related to handover performances.

Essentially, the arrangement described herein combines measurements performed in-the-field and simulation of algorithms that rule the radio connection management - as performed e.g. by the UMTS Radio Network Controller (RNC) - to maintain and maximise the quality of the service (QoS) as perceived by the users.

As indicated, tools available today are able to produce only a list of cells to be added and no suggestions or procedures are dealing with cells that may be deleted from the list. As opposed thereto, in the arrangement described herein, an active set of neighbouring cells (simulated, as it is calculated by mobile terminals) can be taken into account in order to avoid listing redundant (i.e. equivalent) cells so to not override the storage capacity limit.

### Brief description of the annexed drawings

The invention will now be described, by way of reference only, by referring to the enclosed figures of drawing:
- figure 1 is a schematic representation of a cellular network arrangement wherein the method described herein can be applied,
- figure 2 schematically represents a mobile terminal included in a network according to figure 1 including a memory area to store therein a list of current neighbouring cells, according to information communicated by the serving RBS,
- figure 3 schematically describes the arrangement of such a list,
- figure 4 is a flowchart representative of a possible embodiment of the method of the invention, and
- figure 5 further details of the criteria adapted in implementing the method represented by the flowchart of figure 4.

### Detailed description of a preferred embodiments of the invention

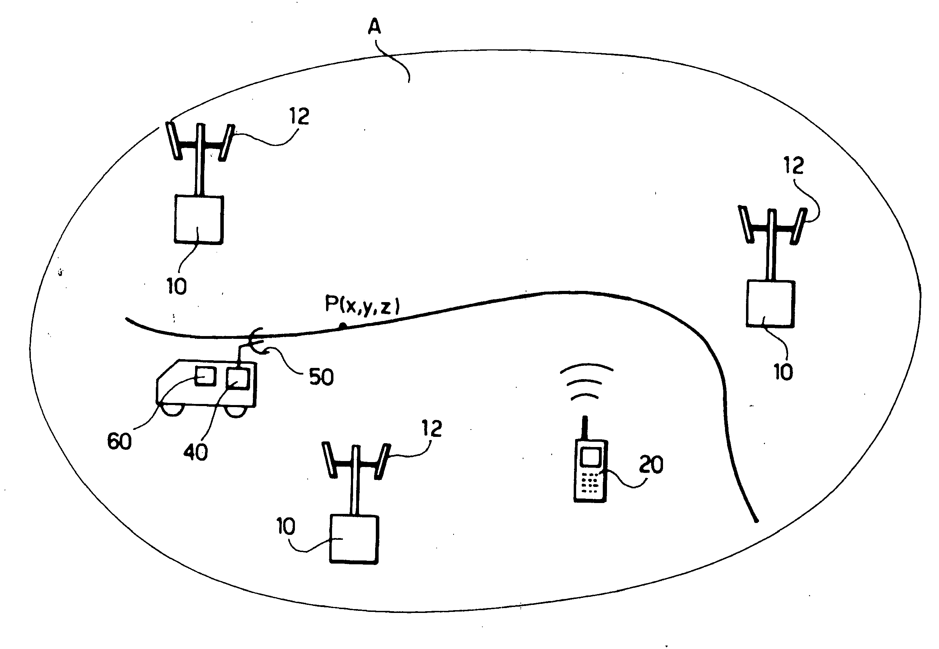

Figure 1 schematically represents a cellular communication network (for instance of the UMTS type, even though the invention is in no way limited to this specific type of cellular network) including a plurality of radio base stations 10 with respective antenna assemblies 12 that ensure radio coverage of a given served area A where mobile user terminals 20 are located.

A generic point in the area served A designated P (x, y, z), z being an altitude coordinate.

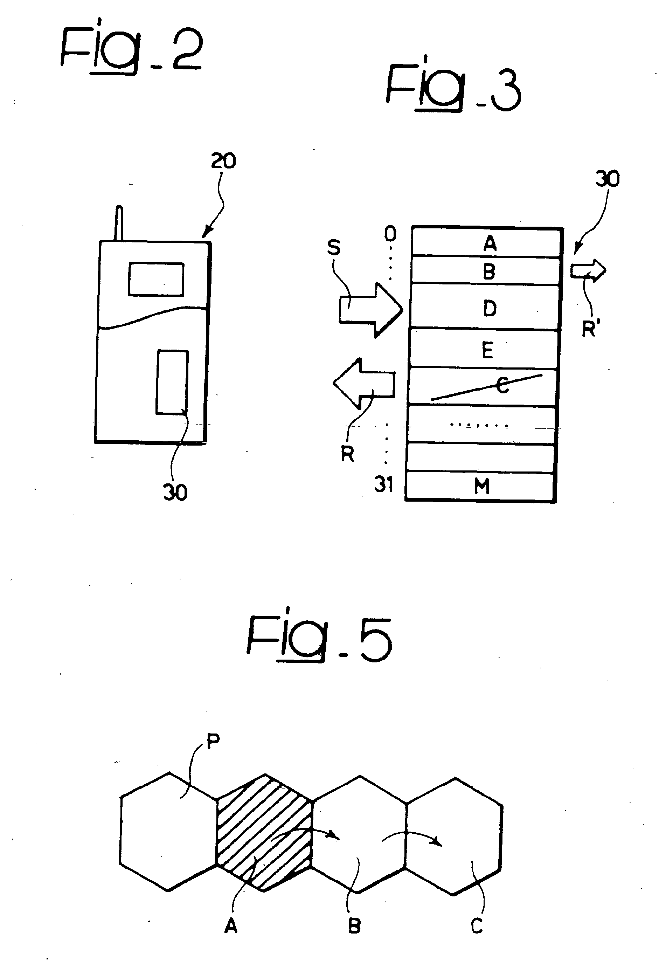

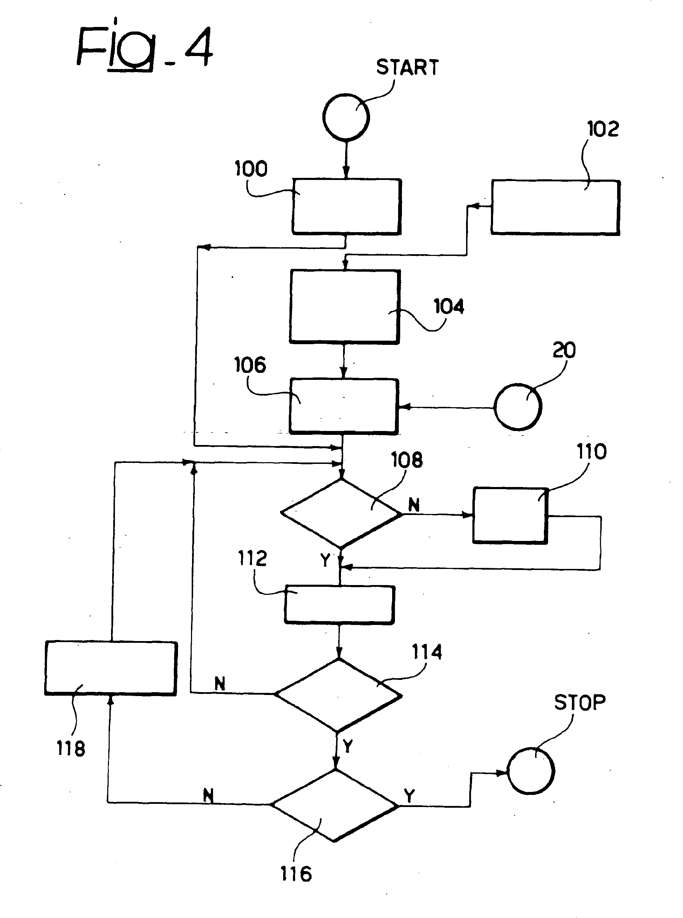

As schematically shown in figure 2, the data memory facilities of each mobile terminal 20 include a memory area 30 having dynamically stored therein a list of the type schematically shown in figure 3. Such a list has stored therein a list of cells neighbouring to the cell that is currently serving the mobile terminal 20.

The entries in such a list (schematically indicated B, C, D and so on in figure 3 - by assuming that the mobile terminal in question is currently served by cell A) are communicated to the mobile terminal from the network infrastructure.

Typically, such lists are stored in the so-called Radio Network Controllers (RNCs) of the network. In conventional arrangements, the information underlying the lists to be stored in mobile terminals is first produced according to network design and then updated by comparing it with e.g. measurements performed in the field e.g. via so-called scanner and measurements done by mobile terminals used for testing the network.

This process essentially provides for any such list being produced by gradually aggregating to the former list information related to those further cells in the network that may qualify as adjacent cells because they satisfy the requirements set for that purpose.

In brief, conventional arrangements provide suggestions for the updating process that essentially correspond to a one-way-process as schematically shown by the arrow S in figure 3, namely a process that produces each single list without correlating it with the others and may lead only to new cells being gradually added to the list.

Conversely, the arrangement described herein provides for such a process being performed in such a way (as better detailed in the following) that the process may also lead to cells being possibly removed from the list as schematically shown by the arrow R in figure 3.

This is typically done by removing from the list those cells that -- based e.g. by the measurements performed by means of a scanner and possible variations simulated by changing network configuration (configuration parameter values) -- are no longer able to ensure the given minimum threshold of acceptable quality of service (QoS), represented by values of one or more operational parameter(s) of the network.

Exemplary of such parameters are e.g. the field strength or the signal-to-interference ratio (for instance the ratio designated Ec/Io in UMTS networks). However, those of skill in the art will promptly appreciate that the scope of the invention is in no way limited to the selection of a specific parameter or sets of parameters.

In a particularly preferred embodiment, of the arrangement described herein, the most relevant parameter or parameters to be dealt with are measured in the field by means of a scanner device 40 which is caused to travel over the area A served by the cellular network.

Mobile scanners of that kind, equipped with one or more probe antennas 50 and having associated processing apparatus 60 are well known in the art (for instance under the designation "WCDMA scanner", where WCDMA is an acronym for Wide-band Code Division Multiple Access) as used by major operators of cellular communication networks.

The flowchart of figure 4 is exemplary of one possible embodiment of a method that may lead to cells being removed (arrow R figure 3) from the list of figure 3.

After a start step, the step 100 in figure 4 exemplifies a collection of the values of a given operational parameter of the network shown in figure 1 over a set of points P in the area served A. The parameter(s) whose values are collected is/are essentially the parameter(s) that will be subsequently used as a benchmark in order to decide whether a certain cell must be left or removed from the list 30.

As indicated in the foregoing, while a single parameter (for instance the field strength) will be referred to hereinafter for the sake of simplicity, the same process described in the following may be applied in respect of two or more such parameters.

The step of collecting the values 100 may also include collecting values that are not directly measured in-the-field (e.g. via a scanner device 40 as schematically shown in figure 1), and may include values that are defined according to system algorithm simulation and design requirements of defined cells.

The step generally designated 104 corresponds to the generation of a list of neighbouring cells for each cell in the network. Such list is finally stored e.g. in the UMTS controller (RNC units) to be communicated properly to mobile terminals 20 as already described in the foregoing.

The step 106 designates a step wherein values of operational parameters corresponding to those who were used to prepare the lists referred to in connection with the step 104 are measured by the mobile terminal(s) 20 used for testing the network.

For instance, the measurement in question may correspond to the measurements, reported by a given user terminal 20, of the RF field strength emitted by different Radio Base Stations and received at each relevant location through which the mobile terminal travels. Mobile terminals of cellular communication networks are already currently arranged to perform such measurements that are used e.g. for possibly prompting a hand-over process to another cell with respect to the cells currently serving the terminal. The details of performing such measurements are well known to those of skill in the art on the basis of e.g. solutions implemented by current commercial systems. This makes it unnecessary to provide herein more detailed description of the criteria for performing such measurements.

The step 108 in figure 4 exemplifies a step wherein the measurement(s) taken by the mobile terminal 20, or estimated values derived (via a process that takes into account network configuration parameter values actual or changed by assumption) from those measurement(s) are used to decide whether a given cell listed as a neighbouring cell in the list 30 actually "deserves" (i.e. satisfies the requirements) to be included in such a list.

For instance, the measurements taken by the mobile terminal 20 may indicate that a given cell, even if originally considered to be a possible neighbouring cell, would in fact fail to provide an acceptable quality of service (QoS). For instance, this may be due to an insufficient field strength as actually measured by the terminal equipment in all or part of the relevant places.

If the measurements indicate that the cell in question does not properly qualify for being included in the list 30, in a step 110 the respective identification name or code is removed from the list 30.

In a step 112, that is subsequent directly to step 108, if such step yields a positive result (namely the cell tested is found to properly qualify as a neighbouring cell and is left in the list 30) - a counter for the neighbouring cells is increased to scan the list 30 and process highlighted by steps 108 and (possibly) 110 is repeated for another cell. The step 114 is merely a step where a check is made as to whether all the cells included in the list 30 have been evaluated.

When the step 114 yields a positive result, the whole list 30 has been scanned, and the system evolves to another step 116 where a check is made as to whether all the lists of interest for proper operation of the network considered have been "optimised".

In the negative, a new list to be optimised is selected in a step 118 and the sequence of operations of the steps 108 to 114 is repeated for a new list.

When the step 114 yields a positive result, all the lists have been optimised, and the process is terminated (stop).

When the maximum number of cells listed as neighbouring cells is overriding the limit represented by the maximum number of cells that can be listed (e.g. 32 cells), a "pruning" operation (adapted to be performed within the step 108 of figure 4) can be carried out based on the principle schematically represented in figure 5.

By way of example, figure 5 refers to a situation where the mobile terminal 20 is currently served by a given cell A (hatched lines) and the cells designated B, C and D are all listed as neighbouring cells in the list 30 related to a given cell and adapted to ensure a proper quality of service.

Observation of figure 5 shows that cells B and D can be reached from the cell A via direct transitions, namely A to B and A to D, respectively. Conversely, the transition from the cell A to the cell C can only take place as a two-step process including first the transition A to B and subsequently the transition B to C.

In such a case, listing the cell C as a neighbouring cell to the cell A is in fact redundant in that, while the mobile terminal in question may notionally "switch" from the cell A to the cell C (notionally, in that such a switch might ensure that the desired quality of service is preserved after the switch), such a switch will never take place in practice (e.g. because cell B is always a preferred candidate for handover in respect of cell C).

In such a case, the redundancy inherent in the transition A to C is detected and the respective information concerning the cell C is removed from the list 30 as schematically represented by the arrow R' in figure 3.

Of course, without prejudice to the underling principles of the invention, the details and embodiments may vary, even significantly, with respect to what has been described and shown, just by way of example, without departing from the scope of the invention as defined by the annexed claims.

## Claims

1. A method of producing, for at least one cell in a mobile communication network, a list (30) of neighbouring cells to be communicated to mobile terminals (20) of a cellular communication network (10, 12), the method including both the step of adding (S) and the step of removing (R; R') neighbouring cells from said list.

2. The method of claim 1, **characterised in that** it includes the step of producing one said list (30) for each cell in the area (A) of said mobile communication network.

3. The method of either of claims 1 or 2, **characterised in that** it includes the steps of:
- selecting at least one operational parameter of said cellular communication network, said at least one operational parameter being representative of the quality of service (QoS) perceived, by the user, through said mobile terminal (20),
- defining at least one threshold value for said at least one operational parameter representative of a minimum level of said quality of service,
- checking (108) whether the neighbouring cells included in said list have values for said at least one operational parameter better than said respective threshold value, and
- removing (110) from the list those neighbouring cells that fail to pass the said check.

4. The method of claim 3, **characterised in that** it includes the step of identifying the value of said at least one operational parameter by means of a measurements performed in-the-field over the area (A) served by said cellular network.

5. The method of either of claims 3 or 4, **characterised in that** said step of checking includes the operation of comparing a value of said at least one operational parameter at the location of a mobile terminal (20) in said network with an actual measured value of such at least one operational parameter as measured by said mobile terminal (20) or an instrument.

6. The method of any of claims 3 to 5, **characterised in that** said step of checking (108) includes the operation of comparing a value of said at least one operational parameter at the location of a mobile terminal (20) in said network as resulting from a simulation process where relevant configuration parameters are changed in order to pursue network optimisation.

7. The method of any of claims 3 to 6, **characterised in that** said at least one operational parameter is selected out of the group consisting of a field strength value and a signal-to-interference ratio.

8. The method of any of the previous claims, **characterised in that** it includes the steps of:
- identifying, within the neighbouring cells (B, C, D, ...) listed in said list, neighbouring cells (C) that correspond to indirect transitions from the cell (A) currently serving said mobile terminal (20) that involve a multi-step transition (AB; BC) through at least another cell (B) appearing in said list (30), and
- removing (R') from said list (30) those neighbouring cells corresponding to said indirect transitions.

9. A system for producing a list of neighbouring cells to be communicated to mobile terminal (30) in a cellular communication network, the system being configured for performing the method of any of claims 1 to 8.

10. The system of claim 9, **characterised in that** the information for producing said list of neighbouring cells is located with the radio network controller (RNC) of said cellular communication network.

11. A computer program product, loadable in the memory of at least one computer and including software code portions for performing the steps of the method of any of claims 1 to 8.
